# EUROPEAN PATENT SPECIFICATION

(11) **EP 3 457 175 B1**
(45) Date of publication and mention of the grant of the patent: **06.03.2024**
(21) Application number: 17190935.1
(22) Date of filing: 13.09.2017
(51) Int. Cl.: G01S 15/93, G01S 7/521, G01S 15/87

(54) **A MASTER-SLAVE COMPATIBLE PDC SYSTEM**
MASTER-SLAVE-KOMPATIBLES PDC-SYSTEM
SYSTÈME PDC COMPATIBLE MAÎTRE-ESCLAVE

(43) Date of publication of application: 20.03.2019
(73) Proprietor: Tung Thih Electron (Xiamen) Co., Ltd., Xiamen Fujian 361006 (CN)
(72) Inventor: HUANG, Chengbiao, Xiamen, Fujian 361000 (CN); WANG, Xiong, Xiamen, Fujian 361000 (CN); FU, Jie, Xiamen, Fujian 361000 (CN); WU, Jiangmiao, Xiamen, Fujian 361000 (CN); HUANG, Shuifang, Xiamen, Fujian 361000 (CN); SHEN, Junfeng, Xiamen, Fujian 361000 (CN)
(74) Representative: Cabinet Chaillot

(56) References cited:
- CN-A- 106 842 214
- CN-U- 206 147 093
- US-A1- 2010 245 066

## Description

### Technical Field

The Invention relates to the field of parking distance control (PDC) system, particularly to a masterslave compatible PDC system.

### Background Art

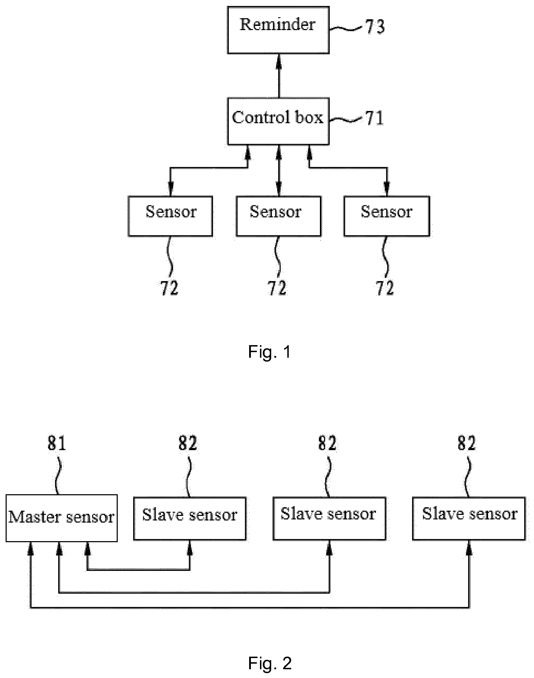

As shown in Fig. 1, the conventional PDC system usually comprises a control box 71, multiple sensors 72, at least one reminder 73, the multiple sensors 72 are respectively connected to the control box 71 and coordinate with each other under the control of the control box 71, wherein, each of the multiple sensors 72 separately detects and transmits the data of any obstacle to the control box 71 for processing. The control box 71 analyzes the data and judges the distance and orientation of the obstacle. When the distance of the obstacle meets the designated conditions, the control box 71 informs the reminder 73 and gives out an alarm. The multiple sensors 72 are set on the external sides of the vehicle body according to demands, for example, front and rear bumpers, and the control box 71 is set in the vehicle. The signal transmission and power supply feed between the multiple sensors 72 and the control box 71, etc. are very complex, not only increasing the cables and the cost of the control box 71, but also causing interference due to too long data cable, because about 4 sensors 72 will usually be used and set at a certain interval.

To address the above problem, a PDC system without host is developed. For details, please refer to Chinese patent CN1892249A. As shown in Fig. 2, it comprises at least one master sensor and one or more slave sensors 82. The master sensor 81 has the obstacle detection function and coordinately controls working sequence of the slave sensors 82; by virtue of its obstacle detection function via the master sensor 91 and coordinated control over working sequence of the slave sensors 82, the control box 71 is substituted, thus eliminating the effect of the control box 71; meanwhile, because the master sensor 81 and the slave sensors 82 are set on the bumpers, the whole PDC system can shorten the length of the data cable and realize test implementation on the bumper, thus increasing the vehicle test efficiency.

As shown in Fig. 3, the Chinese Patent CN102129076A developed by the Applicant to overcome the defect of the patent relates to a cascade-structure PDC system without host, comprising multiple sensors 91, wherein the first terminal of each of the multiple sensors 91 is connected to the second terminal of the adjacent sensor 91 via internal network 92 to form a cascade structure and realize information transmission among the multiple sensors 91. The system is characterized by high response efficiency, high production and installation efficiency and high radar accuracy.

Nevertheless, in the above two patents, either the master sensor 81 and the slave sensor 82 in Chinese patent CN1892249A or the multiple sensor 91 in Chinese patent CN102129076A comprises respectively a microprocessor, i.e. each sensor is a digital probe with CPU, thus causing a high cost.

As shown in Fig. 4, Chinese Patent CN103592649A developed by the Applicant continuously to overcome the defect of the patent relates to an integrated PDC system according to the preamble of claim 1, comprising a master sensor and at least one slave sensor, wherein, the master sensor 1 comprises a CPU module 11, a first ultrasonic transducer 12, a master drive module 13, a master amplifier module 14 and at least one slave drive module 15. In the CPU module 11, an A/D conversion module is provided. The CPU module 11 drives the first ultrasonic transducer 12 via the master drive module 13. The first ultrasonic transducer 12 amplifies and transmits echoed simulation signals to the A/D conversion module of the CPU module 11 via the master amplifier module 14. Each slave sensor 2 is a simulation probe without CPU. The CPU module 11 drives a slave sensor 2 via a slave drive module 15; each slave sensor 2 transmits the echoed simulation signal to the A/D conversion module of the CPU module 11. Each slave sensor 2 comprises a boost drive module 21, a second ultrasonic transducer 22 and an amplifier module 23. The boost drive module 21 locates between the slave drive module 15 and the second ultrasonic transducer 22 for the secondary drive. The slave amplifier module 23 amplifies and transmits the echoed simulation signal to the A/D conversion module of the CPU module 11. The signal line and the power line between the master sensor and the slave sensor are integrated, i.e. current is also transmitted on the signal line and signal is also transmitted on the power line. The master sensor of the integrated PDC system serves as not only a controller but also a probe; at least one slave sensor only plays a role as a probe and is connected to the master sensor for communication, further making the whole PDC system realize all functions as same as the existing PDC system with or without host.

CN 106 842 214 A and CN 206 147 093 U are two other examples of master-slave compatible PDC system that forms part of the technological background of the present invention.

Nevertheless, the Applicant finds out that it can be further optimized, for example, such properties as capacity, detection distance (about 1.5cm), energy, signal amplitude and anti-interference performance can be further improved.

### Summary of the Invention

For this purpose, the Invention is to propose a master-slave compatible PDC system with further improved performance.

The technical solution applied is:
A master-slave compatible PDC system, comprising, according to claim 1, a master sensor and at least one slave sensor; the master sensor comprises a CPU module, a first ultrasonic transducer, a master drive module, a master amplifier module, slave drive modules and power supply modules; the quantity of the slave drive modules is equivalent to that of the slave sensors, making the slave drive modules connected with the slave sensors correspondingly; the slave sensor is a digital probe without CPU and comprises an ultrasonic IC, a boost drive module, and a second ultrasonic transducer; the CPU module drives the first ultrasonic transducer via the master drive module, the first ultrasonic transducer amplifies and transmits echoed signals to an A/D conversion module of the CPU module via the master amplifier module, the CPU module drives the ultrasonic IC of the corresponding slave sensor via a slave drive module, the ultrasonic IC drives the second ultrasonic transducer via the boost drive module, and the second ultrasonic transducer feeds back the echoed signal to the A/D conversion module of the CPU module via the ultrasonic IC. The power supply comprises a first power supply module for the CPU module and a second power supply module for each slave sensor.

Further, according to an embodiment of the invention, the enclosure of the slave sensor comprises 3PINs, comprising a signal PIN from the ultrasonic IC, a negative PIN and a positive PIN; the enclosure of the master sensor comprises more than 3N PINs, comprising a signal PIN from the slave drive module, a negative PIN and a positive PIN from the second power supply; the negative PIN and the positive PIN of the second power supply are correspondingly connected to the ones of the slave sensor; the signal PIN of the slave drive module is correspondingly connected to the PIN of the ultrasonic IC.

Further, according to an embodiment of the invention, the CPU modules can send communication commands to each ultrasonic IC for regulating the configuration parameters of each ultrasonic IC.

Further, according to an embodiment of the invention, the CPU module of the said master sensor forms input ports respectively receiving R reversing signals, SPD speed signals and SWT switch signals.

Further, according to an embodiment of the invention, the CPU module of the sensor forms output ports respectively outputting BUZZER sounds, LED control signals and DATA communications.

Further, according to an embodiment of the invention, the quantity of the slave sensors is 1-11.

Further, according to an embodiment of the invention, each slave sensor is connected to the master sensor by a signal cable and by a power supply cable separate from the signal cable.

The beneficial effects of the Invention lie in that:
With the ultrasonic IC for each slave sensor, the whole system has a farther detection distance and more strong anti-interference capability.

### Brief Description of the Drawings

In order to illustrate the technical scheme in the embodiments of the Invention or in prior art more clearly, the drawings required in description of the embodiments or prior art will be introduced briefly as follows. Obviously, the drawings described below are just a part of the embodiments of the Invention. A person skilled in the art is able to obtain other drawings according to these drawings without any creative work.
Fig. 1 is the structure diagram of a conventional PDC system;
Fig. 2 is the structure diagram of a PDC system without host;

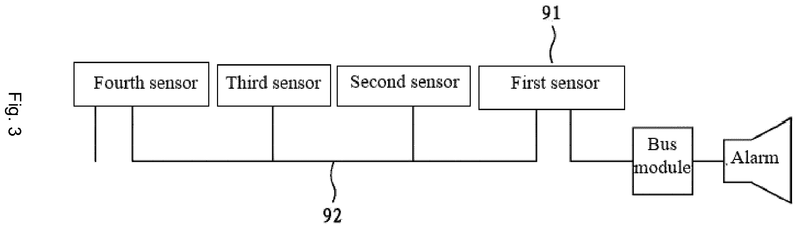

Fig. 3 is the structure diagram of a cascade-structure PDC system without host;

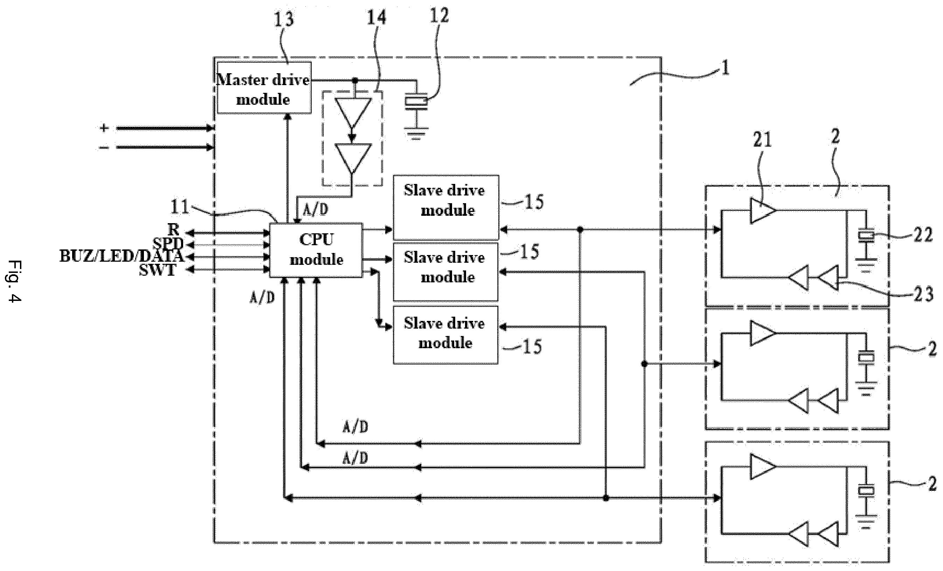

Fig. 4 is the internal structure diagram of an integrated PDC system;
Fig.5 is the structure diagram of a master-slave compatible PDC system;
Fig.6 is the internal structure diagram of the masterslave compatible PDC system as shown in Fig. 5.

### Detailed Description of the Preferred Embodiments

A clear and full description of the technical schemes of the embodiments of the Invention will be given in combination of the drawings as follows. Obviously, the described embodiments are just preferable ones rather than the whole embodiments of the Invention. Based on the embodiments of the Invention, any other embodiments obtained by a person skilled in the art without any creative work will fall within the protection scope of the invention, which is defined in the appended claims.

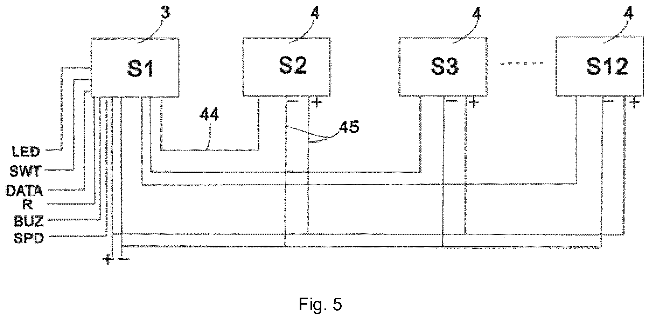

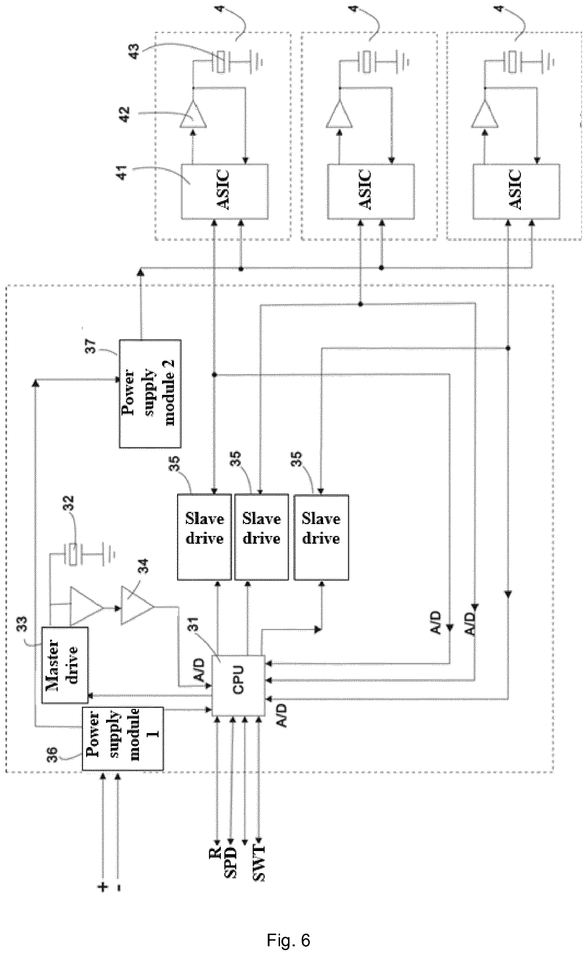

As shown in Fig. 5 and Fig. 6, a master-slave compatible master-slave compatible PDC system, comprising a master sensor 3 and at least one slave sensor 4 with its quantity set based on actual installation requirements, for example, 1, 2, 3, 4, 5, 6, 7, or 11 at most. The present embodiment will be described taking 11 sensors as the example. The master sensor is marked as Sensor 1, abbreviated as S1, and 11 slave sensors as Sensor 2-Sensor 12, abbreviated as S2-S12. Fig. 6 shows only three slave sensors 4.

The master sensor 3 has a CPU module 31, a first ultrasonic transducer 32, a master drive module 33, a master amplifier module 34, a slave drive module 35, and power supply modules 36, 37; The quantity of the drive modules 35 is equivalent to that of the slave sensor 4, making the drive module 35 connected to the slave sensor 4 correspondingly, for example, 11 slave sensors correspond to 11 drive modules, and vice versa. The slave sensor 4 is a digital probe without CPU, and comprises an ultrasonic IC 41, a boost drive module 42, and a second ultrasonic transducer 43. The CPU module 31 drives the first ultrasonic transducer 32 via the master drive module 33, the first ultrasonic transducer 32 transmits the echoed signal to an A/D conversion module of the CPU module 31 via the master amplifier module 34, and the CPU module 31 drives the ultrasonic signal IC 41 of the corresponding slave sensor 4 via the drive module 35, the ultrasonic IC 41 drives the second ultrasonic transducer 43 via the boost drive module 42, and the second ultrasonic transducer 43 feeds back the echoed signal to the A/D conversion module of the CPU module 31 via the ultrasonic IC 41.

With the ultrasonic IC (i.e. ASIC) in all the slave sensors, farther detection distance and stronger anti-interference capacity can be realized; the ultrasonic IC integrates power supply voltage regulator, launch drive, receiving amplification, digital processing and digital output. The CPU module of the master sensor can send communication commands to each ultrasonic IC for regulating the configuration parameters of each ultrasonic IC. Internal configurable parameters of ASIC (i.e., ultrasonic IC) include but are not limited to the following:
1. Amplification gain (signal amplification);
2. Drive current (drive power);
3. Cut threshold (the threshold to capture the effective signal);
4. Filtering bandwidth (after bandwidth of some interferences is filtered, the effective signal can enter);
5. Drive frequency (to be consistent with the frequency of the ultrasonic transducer itself);
6. Temperature value (internal ASIC problems can be read out);
7. Detection distance (allowed detection distance);
8. Transmitting pulse (pulse counts emitted, the larger the pulse count number is, the greater the energy is, and the farther the detection distance is);
9. User memory (to store some production information, such as version number, and production date, etc.);

Communication commands between the CPU module and the ASIC: If the CPU module gives the ASIC different low-level widths, it means different commands, for example, wave transmission command, monitoring command, wave transmission and monitoring command, and such internal IC parameters as amplification gain, drive current, drive frequency, cut threshold and other configuration parameters can be done under the control of digital communication commands of the CPU module, and the configuration parameters can be permanently saved or configured when the power is ON.

As a further modified embodiment, the power supply modules of the master-slave compatible PDC system comprise a first power supply module 36 for the CPU module 31 and a second power supply module 36 for each of the slave sensors 4. In order to make the second power supply module supply power independently, as shown in Fig. 5 and Fig. 6, the enclosure of the slave sensor comprises 3 PINs, i.e., a signal PIN from the ultrasonic IC, a negative PIN and a positive PIN; the enclosure of the master sensor comprises more than 3N PINs, i.e., a signal PIN from the slave drive module, a negative PIN and a positive PIN from the second power supply; the negative PIN and the positive PIN of the second power supply are correspondingly connected to the ones of the slave sensor; the signal PIN of the slave drive module is correspondingly connected to the PIN of the ultrasonic IC.

The signal cable 44 and the power supply cable 45 are provided separately and act independently to each other so that the power supply cable 45 transmits only the current, and the signal cable 44 transmits only the signal, making the detection distance of the PDC system larger, up to 2.5-5cm; separate arrangement of the signal cable and the power supply cable can better realize the function of ASIC and make ASIC provide more energy, thus generating more stable and reliable signals on the signal cable and stronger anti-interference capacity due to less interference of the power supply with the signal cable.

Therefore, power is supplied to each slave sensor independently through the second power supply, and the power supply cable and the signal cable are arranged separately to cooperate with the ASIC of each slave sensor and provide the master-slave compatible PDC system with better properties including capacity, detection distance, energy, signal amplitude, anti-jamming and others.

Based on the improved performance, the slave sensors S2-S8 are controlled by the master sensor S1 in parallel and can be multiplexed at the same time to achieve a multishot, multiple-received signal processing and improve the response speed. For example, the master sensor S1 sends a monitoring signal, and the slave sensors S2-S8 feed back monitoring signals in parallel; multiple transmissions mean multiple receiving; under the circumstance of no interference from the power supply cable, the response speed of the signal cable is greatly enhanced. Additionally, the master sensor S1 serves as a probe too, and can also be controlled by the CPU module, and monitored simultaneously with the slave sensors S2-S8.

As shown in Fig. 5 and Fig. 6, the CPU module of the master sensor can also form an input port for receiving the R reversing signal, the SPD speed signal and the SWT switching signal respectively; the CPU module of the master sensor can also form output ports respectively outputting the BUZZER sounds, the LED control signals and the DATA communications; In addition, it can also have hard wires/LIN/CAN directly connected to other parts of the vehicle, so that the data of the entire masterslave compatible PDC system can be sent to the other parts of the vehicle in order to give out alarms.

The foregoing is only practicable embodiments of the Invention, and could not be understood as limiting the protection scope of the invention, which is defined in the appended claims.

## Claims

1. A master-slave compatible PDC system, comprising a master sensor (3) and at least one slave sensor (4); the master sensor comprising a CPU module (31) including an A/D conversion module, a first ultrasonic transducer (32), a master drive module (33), a master amplifier module (34), slave drive modules (35) and power supply modules (36, 37); the quantity of the slave drive modules being equivalent to that of the slave sensors, the slave drive modules being connected with the slave sensors correspondingly; each slave sensor being a digital probe without CPU and comprising a boost drive module (42) and a second ultrasonic transducer (43); the CPU module driving the first ultrasonic transducer via the master drive module, the first ultrasonic transducer amplifying and transmitting echoed signals to the A/D conversion module of the CPU module via the master amplifier module, wherein each slave sensor comprises an ultrasonic IC (41), the CPU module drives the ultrasonic IC of the corresponding slave sensor via a respective slave drive module, the ultrasonic IC drives the second ultrasonic transducer via the boost drive module, and the second ultrasonic transducer feeds back the echoed signal received from the second ultrasonic transducer to the A/D conversion module of the CPU module via the ultrasonic IC, wherein the power supply modules comprise a first power supply module (36) for the CPU module and a second power supply module (37) for the slave sensors.

2. The master-slave compatible PDC system according to Claim 1, **characterized in that**, an enclosure of the slave sensor comprises 3 PINs comprising a signal PIN from the ultrasonic IC, a negative PIN and a positive PIN; an enclosure of the master sensor comprises more than 3N PINs, comprising a signal PIN from the slave drive module, a negative PIN and a positive PIN from the second power supply module; the negative PIN and the positive PIN of the second power supply module correspondingly connected to the ones of the slave sensor; the signal PIN of the slave drive module correspondingly connected to the PIN of the ultrasonic IC.

3. The master-slave compatible PDC system according to Claim 1, **characterized in that**, the CPU module sends communication commands to each ultrasonic IC for regulating the configuration parameters of each ultrasonic IC.

4. The master-slave compatible PDC system according to Claim 1, **characterized in that**, the CPU module of the master sensor forms input ports respectively receiving R reversing signals, SPD speed signals and SWT switch signals.

5. The master-slave compatible PDC system according to Claim 1, **characterized in that**, the CPU module of the sensor forms output ports respectively outputting BUZZER sounds, LED control signals and DATA communications.

6. The master-slave compatible PDC system according to Claim 1, **characterized in that**, the quantity of the slave sensors is 1 to 11.

7. The master-slave compatible PDC system according to claim 1, **characterized in that**, each slave sensor is connected to the master sensor by a signal cable (44) and by a power supply cable (45) separate from the signal cable.

## Patentansprüche

1. - Master-Slave-kompatibles PDC-System, umfassend einen Master-Sensor (3) und mindestens einen Slave-Sensor (4); der Master-Sensor umfassend ein CPU-Modul (31), das ein A/D-Wandlermodul beinhaltet, einen ersten Ultraschallwandler (32), ein Master-Ansteuermodul (33), ein Master-Verstärkermodul (34), Slave-Ansteuermodule (35) und Stromversorgungsmodule (36, 37); wobei die Anzahl der Slave-Ansteuermodule äquivalent wie die der Slave-Sensoren ist, die Slave-Ansteuermodule entsprechend mit den Slave-Sensoren verbunden sind; wobei jeder Slave-Sensor eine digitale Sonde ohne CPU ist und ein Boost-Ansteuermodul (42) und einen zweiten Ultraschallwandler (43) umfasst; wobei das CPU-Modul den ersten Ultraschallwandler über das Master-Ansteuermodul ansteuert, wobei der erste Ultraschallwandler die Echosignale verstärkt und über das Master-Verstärkermodul an das A/D-Wandlermodul des CPU-Moduls überträgt,
wobei jeder Slave-Sensor einen Ultraschall-IC (41) aufweist, das CPU-Modul den Ultraschall-IC des entsprechenden Slave-Sensors über ein entsprechendes Slave-Ansteuermodul ansteuert, der Ultraschall-IC den zweiten Ultraschallwandler über das Boost-Ansteuermodul ansteuert, und der zweite Ultraschallwandler das von dem zweiten Ultraschallwandler empfangene Echosignal über den Ultraschall-IC an das A/D-Wandlermodul des CPU-Moduls zurückgibt, wobei die Stromversorgungsmodule ein erstes Stromversorgungsmodul (36) für das CPU-Modul und ein zweites Stromversorgungsmodul (37) für die Slave-Sensoren umfassen.

2. - Master-Slave-kompatibles PDC-System nach Anspruch 1, **dadurch gekennzeichnet, dass** ein Gehäuse des Slave-Sensors 3 Kontakte umfasst, umfassend einen Signalkontakt von dem Ultraschall-IC, einen Minuskontakt und einen Pluskontakt; ein Gehäuse des Master-Sensors mehr als 3N Kontakte umfasst, umfassend einen Signalkontakt von dem Slave-Ansteuermodul, einen Minuskontakt und einen Pluskontakt von dem zweiten Stromversorgungsmodul; der Minuskontakt und der Pluskontakt des zweiten Stromversorgungsmoduls entsprechend mit jenen des Slave-Sensors verbunden sind; der Signalkontakt des Slave-Ansteuermoduls entsprechend mit dem Kontakt des Ultraschall-IC verbunden ist.

3. - Master-Slave-kompatibles PDC-System nach Anspruch 1, **dadurch gekennzeichnet, dass** das CPU-Modul Kommunikationsbefehle an jeden Ultraschall-IC sendet, um die Konfigurationsparameter von jedem Ultraschall-IC zu regulieren.

4. - Master-Slave-kompatibles PDC-System nach Anspruch 1, **dadurch gekennzeichnet, dass** das CPU-Modul des Mastersensors Eingangsanschlüsse bildet, die jeweils R-Umkehrsignale, SPD-Drehzahlsignale und SWT-Schaltsignale empfangen.

5. - Master-Slave-kompatibles MDE-System nach Anspruch 1, **dadurch gekennzeichnet, dass** das CPU-Modul des Sensors Ausgangsanschlüsse bildet, die jeweils Summertöne, LED-Steuersignale und DATA-Kommunikation ausgeben.

6. - Master-Slave-kompatibles PDC-System nach Anspruch 1, **dadurch gekennzeichnet, dass** die Anzahl der Slave-Sensoren 1 bis 11 ist.

7. Master-Slave-kompatibles PDC-System nach Anspruch 1, **dadurch gekennzeichnet, dass** jeder Slave-Sensor über ein Signalkabel (44) und über ein von dem Signalkabel separates Stromversorgungskabel (45) mit dem Master-Sensor verbunden ist.

## Revendications

1. - Système de contrôle de distance de stationnement (PDC) compatible maître-esclave, comprenant un capteur maître (3) et au moins un capteur esclave (4) ; le capteur maître comprenant un module UC (31) incluant un module de conversion A/N, un premier transducteur ultrasonique (32), un module de commande maître (33), un module amplificateur maître (34), des modules de commande esclaves (35) et des modules d'alimentation électrique (36, 37) ; le nombre de modules de commande esclaves étant équivalent à celui des capteurs esclaves, les modules de commande esclaves étant connectés aux capteurs esclaves de manière correspondante ; chaque capteur esclave étant une sonde numérique sans UC et comprenant un module de commande d'amplification (42) et un second transducteur ultrasonique (43) ; le module UC commandant le premier transducteur ultrasonique par l'intermédiaire du module de commande maître, le premier transducteur ultrasonique amplifiant et transmettant des signaux d'écho au module de conversion A/N du module UC par l'intermédiaire du module amplificateur maître, chaque capteur esclave comprenant un circuit intégré à ultrasons (41), le module UC commandant le circuit intégré à ultrasons du capteur esclave correspondant par l'intermédiaire d'un module de commande esclave respectif, le circuit intégré à ultrasons commandant le second transducteur ultrasonique par l'intermédiaire du module de commande d'amplification, et le second transducteur ultrasonique renvoyant le signal d'écho reçu en provenance du second transducteur ultrasonique au module de conversion A/N du module UC par l'intermédiaire du circuit intégré à ultrasons, les modules d'alimentation électrique comprenant un premier module d'alimentation électrique (36) pour le module UC et un second module d'alimentation électrique (37) pour les capteurs esclaves.

2. - Système PDC compatible maître-esclave selon la revendication 1, **caractérisé par le fait qu'**une enceinte du capteur esclave comprend 3 broches comprenant une broche de signal du circuit intégré à ultrasons, une broche négative et une broche positive ; une enceinte du capteur maître comprend plus de 3N broches, comprenant une broche de signal du module de commande esclave, une broche négative et une broche positive du second module d'alimentation électrique ; la broche négative et la broche positive du second module d'alimentation électrique sont connectées de manière correspondante à celles du capteur esclave ; la broche de signal du module de commande esclave est connectée de manière correspondante à la broche du circuit intégré à ultrasons.

3. - Système PDC compatible maître-esclave selon la revendication 1, **caractérisé par le fait que** le module UC envoie des instructions de communication à chaque circuit intégré à ultrasons pour réguler les paramètres de configuration de chaque circuit intégré à ultrasons.

4. - Système PDC compatible maître-esclave selon la revendication 1, **caractérisé par le fait que** le module UC du capteur maître forme des ports d'entrée recevant respectivement des signaux de recul R, des signaux de vitesse SPD et des signaux de commutation SWT.

5. - Système PDC compatible maître-esclave selon la revendication 1, **caractérisé par le fait que** le module UC du capteur forme des ports de sortie émettant respectivement des sons BUZZER, des signaux de commande de DEL et des communications DATA.

6. - Système PDC compatible maître-esclave selon la revendication 1, **caractérisé par le fait que** le nombre de capteurs esclaves est de 1 à 11.

7. - Système PDC compatible maître-esclave selon la revendication 1, **caractérisé par le fait que** chaque capteur esclave est connecté au capteur maître par un câble de signal (44) et par un câble d'alimentation électrique (45) séparé du câble de signal.
